# EUROPEAN PATENT APPLICATION

(11) **EP 4 546 766 A1**
(43) Date of publication of application: **30.04.2025**
(21) Application number: 23868431.0
(22) Date of filing: 31.08.2023
(51) Int. Cl.: H04M 1/72454, H04M 1/02, G06F 3/041, G06F 3/0484, G06F 3/0481

(54) **METHOD FOR DISPLAYING CONTENT USING DISPLAY, AND ELECTRONIC DEVICE SUPPORTING SAME**

(30) Priority: 19.09.2022 KR 20220117590; 14.10.2022 KR 20220132298
(71) Applicant: Samsung Electronics Co., Ltd., Suwon-si, Gyeonggi-do 16677 (KR)
(72) Inventor: KIM, Hyunwoo, Suwon-si, Gyeonggi-do 16677 (KR); MOON, Taeyong, Suwon-si, Gyeonggi-do 16677 (KR); KIM, Sangheon, Suwon-si, Gyeonggi-do 16677 (KR); LIM, Yeunwook, Suwon-si, Gyeonggi-do 16677 (KR)
(74) Representative: Appleyard Lees IP LLP
(86) International application number: PCT/KR2023/013014
(87) International publication number: WO 2024/063376

(57) **Abstract**

According to an embodiment disclosed in the specification, an electronic device may include a sensor module, at least one display, a memory, and at least one processor. The at least one processor may display a plurality of components through the display in a first mode of the electronic device, may determine a pivot region including a plurality of grids, may detect a change to a second mode of the electronic device based on sensing information sensed through the sensor module, and may maintain a layout of components included in the pivot region and display the plurality of components in the second mode. Other various embodiments identified through the specification are possible.

## Description

### [Technical Field]

Embodiments disclosed in this specification relate to a method of displaying content by using a display, and an electronic device supporting the same.

### [Background Art]

Electronic devices such as a smartphone and a tablet PC may operate in various modes (e.g., a landscape mode or a portrait mode) depending on a rotation direction. A foldable electronic device or a rollable electronic device may operate in various modes depending on whether it is folded, a folding angle, and an unfolded display area.

An electronic device may display various components (or pieces of content) such as icons and widgets through a display. The electronic device may display components by dividing a display region into a plurality of grids. For example, an icon for launching an application may be positioned in one grid. For another example, a widget may be positioned in grids having various sizes, such as 2×1, 2×2, and 1×4.

The arrangement of grids may vary depending on a rotation direction in one display. For example, an electronic device having a shape of a general bar may include one display. In case of a portrait mode, the electronic device may place components through grids of 4×6 (width x height, hereinafter it is identically applied thereto). When a mode of the electronic device is switched to a landscape mode by the rotation of the electronic device, the electronic device may place components through grids of 6×4. When the mode is changed from a portrait mode to a landscape mode, components (e.g., icons, widgets) being displayed are maintained to be unchanged, but the layout (arrangement form) of the components may be changed.

In the case of a foldable electronic device including a plurality of displays, the mode thereof may be changed, and the grid arrangement thereof may vary depending on the rotation direction or folding angle. Depending on a mode change, components (e.g., an icon or a widget) being displayed on a display are maintained to be unchanged, but the layout of the components may be changed.

### [Disclosure]

### [Technical Problem]

When a mode of an electronic device is changed depending on rotation or folding/unfolding, a width x height ratio of a plurality of grids is changed to reconstruct components such as widgets or icons. In this case, components may be inconsistently changed, which may cause inconvenience to a user.

When the electronic device rotates from a vertical direction to a horizontal direction (changing from a portrait mode to landscape mode), components may rotate together with grids, and thus an interval between components may be too far apart from each other or the size of a widget may be excessively enlarged. Also, in this case, the visibility of components is low, which may cause inconvenience to the user.

### [Technical Solution]

According to an embodiment, an electronic device may include a sensor module, at least one display, a memory, and at least one processor. The at least one processor may display a plurality of components through the display in a first mode of the electronic device, may determine a pivot region including a plurality of grids, may detect a change to a second mode of the electronic device based on sensing information sensed through the sensor module, and may maintain a layout of components included in the pivot region and display the plurality of components in the second mode.

According to an embodiment, a method for displaying content may be performed by an electronic device. The method may include displaying a plurality of components through a display of the electronic device in a first mode of the electronic device, determining a pivot region including a plurality of grids, detecting a change to a second mode of the electronic device based on sensing information sensed through the sensor module of the electronic device, and maintaining a layout of components included in the pivot region and displaying the plurality of components in the second mode.

### [ Description of Drawings]

FIG. 1 is a block diagram illustrating an electronic device in a network environment, according to various embodiments.
FIG. 2 illustrates an electronic device, according to an embodiment.
FIG. 3 shows a foldable electronic device, according to an embodiment.
FIG. 4 is a flowchart illustrating a method of displaying content, according to an embodiment.
FIG. 5 illustrates an exemplary diagram illustrating a pivot region according to rotation of a foldable electronic device, according to an embodiment.
FIG. 6 illustrates an exemplary diagram illustrating a pivot region according to folding of a foldable electronic device, according to an embodiment.
FIG. 7A is a flowchart illustrating determination of a pivot region, according to an embodiment.
FIG. 7B is an exemplary diagram illustrating movement of a pivot region, according to an embodiment.
FIG. 8 is an exemplary view of a reference line of a folded state, according to an embodiment.
FIG. 9 is an exemplary diagram of a reference line in a fully unfolded state, according to an embodiment.
FIG. 10 shows mapping of a top pivot region and a left pivot region, according to an embodiment.
FIG. 11 shows mapping of a bottom pivot region and a right pivot region, according to an embodiment.

With regard to description of drawings, the same or similar components will be marked by the same or similar reference signs.

### [ Mode for Invention]

Hereinafter, various embodiments of the disclosure will be described with reference to accompanying drawings. Accordingly, those of ordinary skill in the art will recognize that modification, equivalent, and/or alternative on the various embodiments described herein can be variously made without departing from the scope of the disclosure.

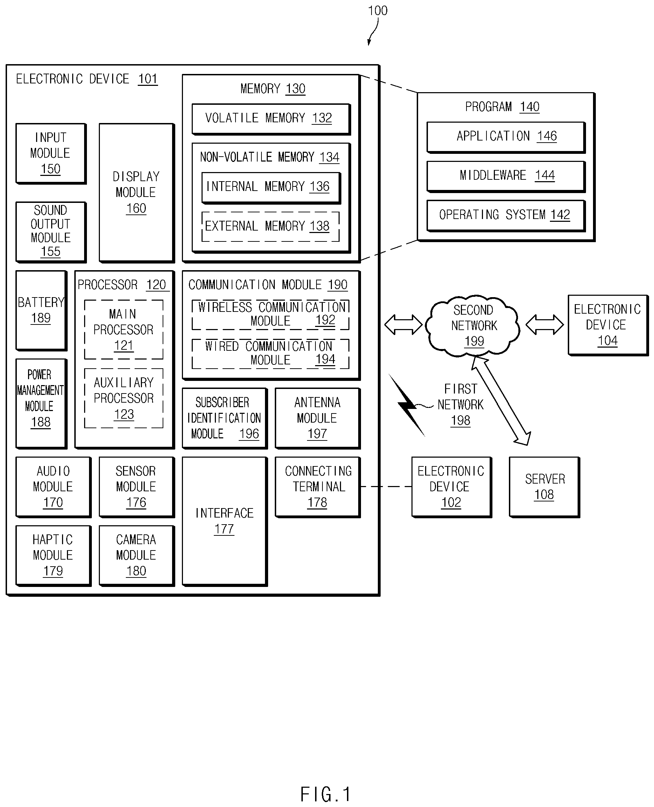

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

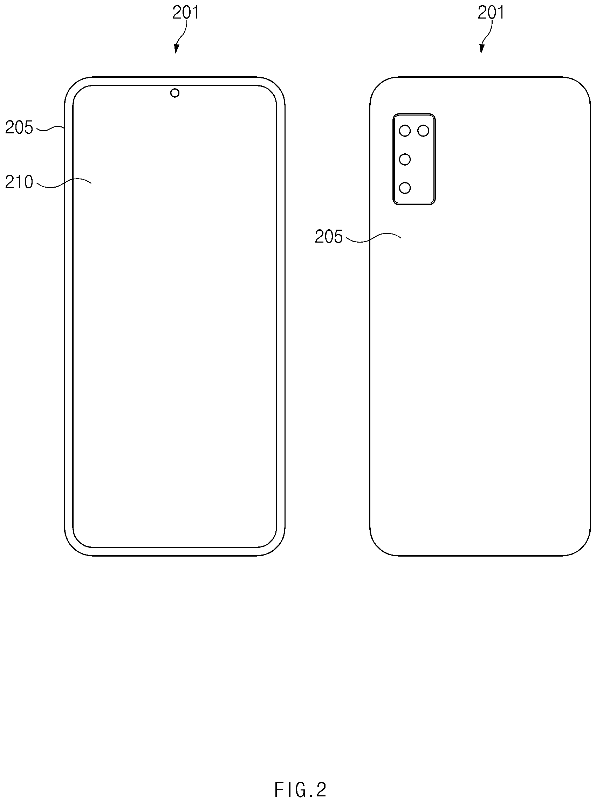

FIG. 2 illustrates an electronic device, according to an embodiment.

Referring to FIG. 2, an electronic device 201 may include a housing (or a body part) 205 and a display 210. The housing (or a body part) 205 may include the display 210 and/or at least one hole exposing at least part of configurations such as a button and a camera lens to the outside. The housing (or body part) 205 may include a configuration such as a processor (e.g., the processor 120 in FIG. 1), a memory (e.g., the memory 130 in FIG. 1), a sensor module (e.g., the sensor module 176 in FIG. 1), a printed circuit board (e.g., printed circuit board (PCB), printed board assembly (PBA), flexible PCB (FPCB), or rigid-flexible PCB (RFPCB)), and a battery (e.g., the battery 189 in FIG. 1) for driving the electronic device 201 therein.

The display 210 (e.g., the display module 160 of FIG. 1) may output content to be provided to a user. For example, the display 210 may display various components (e.g., icons or widgets) of a home screen. A region of the display 210 in which components are positioned may be divided into a plurality of grids. The components may be arranged depending on a plurality of specified grids.

The electronic device 201 may operate in a portrait mode (or a vertical mode) or a landscape mode (or a horizontal mode). For example, the portrait mode may be a form in which components are positioned in grids of 4×6. The landscape mode may be a form in which components are positioned in grids of 6×4. According to an embodiment, when a mode is changed, the electronic device 201 may keep the layout of some components unchanged.

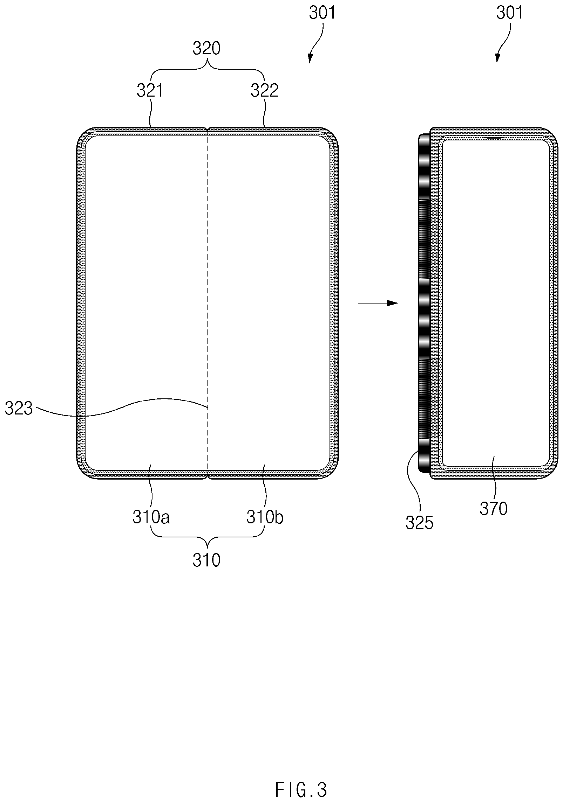

FIG. 3 shows a foldable electronic device, according to another embodiment.

Referring to FIG. 3, a foldable electronic device 301 (e.g., the electronic device 101 of FIG. 1) may include a flexible display 310 and housing 320. The foldable electronic device 301 may be folded about a folding line 323.

The flexible display 310 may be folded about the folding line 323. The folding line 323 may be formed between first housing 321 and second housing 322.

The flexible display 310 may include a first display portion 310a and a second display portion 310b. The first display portion 310a and the second display portion 310b may display various pieces of content.

For example, the first display portion 310a and the second display portion 310b may be fully unfolded depending on the rotation of the housing 320. In a fully unfolded state, the first display portion 310a and the second display portion 310b may form one plane. In a fully unfolded state, the first display portion 310a and the second display portion 310b may display a piece of integrated content (e.g., a web search screen).

For another example, the first display portion 310a and the second display portion 310b may be in a partially folded state (or a partially unfolded state) (e.g., about 120 degrees) forming a specified angle. In a partially folded state, the first display portion 310a may display first content (e.g., a web search screen), and the second display portion 310b may display second content (e.g., a keyboard).

For still another example, the first display portion 310a and the second display portion 310b may be in a fully folded state depending on the rotation of the housing 320. In the fully folded state, the first display portion 310a and the second display portion 310b may be positioned such that display regions overlap each other. In the fully folded state, the first display portion 310a and the second display portion 310b may be in a screen off state.

The housing 320 may be folded about the folding line 323. The housing 320 may include the first housing 321 and the second housing 322. According to an embodiment, the housing 320 may include a folding structure (e.g., a hinge) 325 in a portion corresponding to the folding line 323. For example, the first housing 321 and the second housing 322 may be unfolded or folded by rotation of the hinge.

The first display portion 310a may be mounted in the first housing 321. The first display portion 310a may rotate together depending on the rotation of the first housing 321. The second display portion 310b may be mounted in the second housing 322. The second display portion 310b may rotate together depending on the rotation of the second housing 322.

The foldable electronic device 301 may include various configurations inside the housing 320. For example, the foldable electronic device 301 may include components such as a processor, a memory, a battery, a printed circuit board, and a communication circuit inside the housing 320.

The foldable electronic device 301 may include a sub-display 370 exposed to the outside in a fully folded state. The sub-display 370 may be mounted on a surface opposite to a surface on which the flexible display 310 is mounted. The sub-display 370 may operate in a state where the foldable electronic device 301 is fully folded. The sub-display 370 may have a smaller area than the flexible display 310.

In FIG. 3, the first display portion 310a and the second display portion 310b of the flexible display 310 are folded to face each other as an example, but an embodiment is not limited thereto. The foldable electronic device 301 may be folded such that the first display portion 310a and the second display portion 310b face different surfaces.

FIG. 3 illustrates that the foldable electronic device 301 is folded once. However, an embodiment is not limited thereto. The foldable electronic device 301 may be a multi-foldable device.

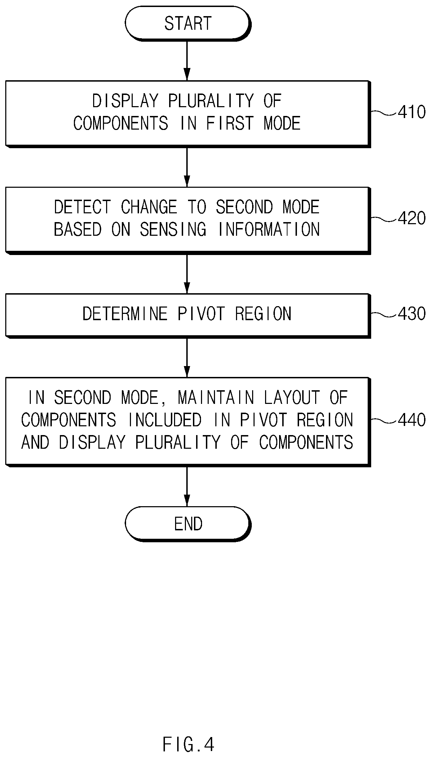

FIG. 4 is a flowchart illustrating a method of displaying content, according to an embodiment.

Referring to FIGS. 1 to 4, in operation 410, the processor 120 may display a plurality of components through the display module 160 in a first mode. The plurality of components may include at least one of an application execution icon, a folder icon, and a widget.

For example, as illustrated in FIG. 2, in a case of the electronic device 201 in a form of a general bar, the first mode may be one of a portrait mode (or a vertical mode) and a landscape mode (or a horizontal mode).

For another example, as illustrated in FIG. 3, in a case of the foldable electronic device 301, the first mode may be one of a portrait mode (hereinafter, referred to as a "cover portrait mode") of the sub-display 370 in a folded state, a landscape mode (hereinafter, referred to as a "cover landscape mode") of the sub-display 370 in a folded state, a portrait mode (hereinafter, referred to as a "main portrait mode") of the flexible display 310 in a fully unfolded state, a landscape mode (hereinafter, referred to as a "main landscape mode") of the flexible display 310 in a fully unfolded state, a landscape mode (hereinafter, referred to as a "flex mode") of the flexible display 310 or the sub-display 370 in a partially unfolded state, or a portrait mode hereinafter, referred to as a "flex vertical mode") of the flexible display 310 or the sub-display 370 in a partially unfolded state.

The processor 120 may align and display a plurality of components depending on the arrangement of a plurality of grids preset for the first mode. For example, an application execution icon or folder icon may be placed inside one grid. Widgets may be positioned inside grids having various sizes, such as 2×1, 2×2, and 4×1, depending on the set size.

In operation 420, the processor 120 may detect a change to a second mode based on sensing information sensed through the sensor module (or sensor unit) 176 (e.g., a gyro sensor, an acceleration sensor, a grip sensor, or a hall sensor).

For example, the processor 120 may detect the rotation of the bar-shaped electronic device 201 or the foldable electronic device 301 by using a first sensor (e.g., a gyro sensor, an acceleration sensor, or a grip sensor). For another example, the processor 120 may detect a folding angle of the foldable electronic device 301 by using a second sensor (e.g., a hall sensor).

According to an embodiment, in a case of the electronic device 201 in a form of a general bar, when the first mode is a landscape mode, the second mode may be a portrait mode. Alternatively, when the first mode is a portrait mode, the second mode may be a landscape mode.

According to an embodiment, in a case of the foldable electronic device 301, when the first mode is a cover portrait mode, the second mode may be one of a cover landscape mode, a main portrait mode, a main landscape mode, a flex mode, or a flex vertical mode. When the first mode is a cover landscape mode, the second mode may be one of a cover portrait mode, a main portrait mode, a main landscape mode, a flex mode, or a flex vertical mode. When the first mode is a main portrait mode, the second mode may be one of a cover portrait mode, a cover landscape mode, a main landscape mode, a flex mode, or a flex vertical mode. When the first mode is a main landscape mode, the second mode may be one of a cover portrait mode, a cover landscape mode, a main portrait mode, a flex mode, and a flex vertical mode. When the first mode is a flex mode, the second mode may be one of a cover portrait mode, a cover landscape mode, a main portrait mode, a main landscape mode, or a flex vertical mode. When the first mode is a flex vertical mode, the second mode may be one of a cover portrait mode, a cover landscape mode, a main portrait mode, a main landscape mode, or a flex mode.

In operation 430, the processor 120 may determine a pivot region including a plurality of grids. When the mode is changed, the pivot region may be a grid region in which the layout of components is maintained to be unchanged.

For example, when the electronic device 201 in a form of a general bar is displaying a plurality of components in a portrait mode of a 4×6 grid, the pivot region may correspond to upper grids of 4×4.

For another example, when the foldable electronic device 301 is displaying a plurality of components in the main portrait mode of a 4×6 grid, the pivot region may correspond to upper grids of 4×4.

According to an embodiment, the processor 120 may determine a pivot region based on a grid arrangement of the first mode before a change, a grid arrangement in the second mode after a change, component information (e.g., an area occupied by a widget), or user information (e.g., a user selection or a user input). The processor 120 may determine a reference line (a grid column or grid row), a size (coordinates of a start grid and coordinates of an end grid) of the pivot region, and a shape (e.g., square or rectangular) of the pivot region.

According to an embodiment, operation 430 may be performed before operation 420. The processor 120 may pre-determine and store the pivot region for each of other changeable modes in the first mode. When a location of a widget or the arrangement of components is changed, the processor 120 may update and store the pivot region. When the processor 120 detects a change to the second mode, the processor 120 may match the grid such that the layout of components included in the stored pivot region is maintained.

In operation 440, in the second mode, the processor 120 may maintain the layout of components included in the pivot region and may display a plurality of components. Under control of the processor 120, the layout of components included in the pivot region in the first mode may be maintained to be the same as that in the second mode.

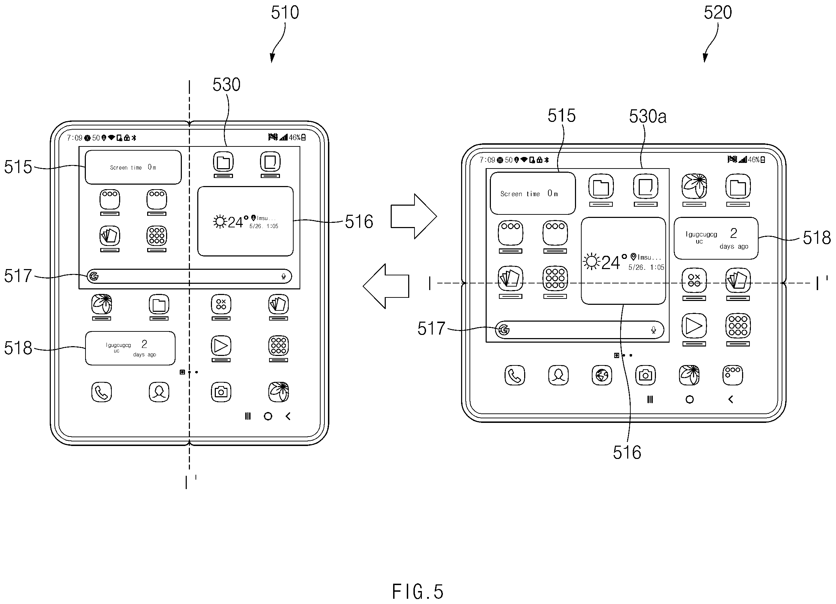

FIG. 5 illustrates an exemplary diagram illustrating a pivot region according to rotation of a foldable electronic device, according to an embodiment. FIG. 5 illustrates a foldable electronic device, but an embodiment is not limited thereto.

Referring to FIGS. 1, 3, and 5, in a main portrait mode 510, the processor 120 may display a plurality of components through the flexible display 310. The plurality of components may include at least one of an application execution icon, a folder icon, and widgets 515, 516, 517, and 518. The main portrait mode 510 may be a mode in which the flexible display 310 operates in a portrait mode while the foldable electronic device 301 is unfolded (a folding angle is 180 degrees). For example, the main portrait mode 510 may be a state in which a folding line I-I' is disposed in a direction perpendicular to the ground.

In the main portrait mode 510, the processor 120 may align and place a plurality of components on preset grids of 4×6. For example, an application execution icon or folder icon may be placed inside one grid. The widgets 515, 516, 517, and 518 may be positioned inside grids of sizes of 2×1, 2×2, 4×1, and 2×1 depending on the set size, respectively.

The processor 120 may detect the rotation of the electronic device 301 by using a first sensor (e.g., a gyro sensor, an acceleration sensor, or a grip sensor). When sensing information of the first sensor is changed to be greater than or equal to a specified reference value, the processor 120 may change a mode to a main landscape mode 520. The main landscape mode 520 may be a mode in which the flexible display 310 operates in a landscape mode while the foldable electronic device 301 is unfolded (a folding angle is 180 degrees). For example, the main portrait mode 510 may be a state in which the folding line I-I' is positioned in a direction parallel to the ground.

The processor 120 may determine the pivot region 530 based on grid arrangement of the main portrait mode 510, grid arrangement of the main landscape mode 520, the number of layouts of the widgets 515, 516, 517, and 518 or the layout area of the widgets 515, 516, 517, and 518, and user information (e.g., a user input or a region including a lot of apps having heavy usage).

The size of the pivot region 530 in a first direction (horizontal direction) may be determined as the number of grids of the main portrait mode 510 in the first direction. For example, when the main portrait mode 510 is composed of grids of 4×6, the number of grids of the pivot region 530 in a horizontal direction may be 4.

The size of the pivot region 530 in a second direction (vertical direction) may be determined as the number of grids of the main landscape mode 520 in the second direction. For example, when the main landscape mode 520 is composed of grids of 6×4, the number of grids of the pivot region 530 in the vertical direction may be 4.

According to an embodiment, the processor 120 may determine a preliminary pivot region based on a grid layout of the main portrait mode 510 and a grid layout of the main landscape mode 520, and may determine the pivot region 530 by reflecting the layout of widgets. For example, when the boundary of the preliminary pivot region overlaps the widgets 515, 516, 517, and 518, the processor 120 may determine the pivot region 530 by moving the preliminary pivot region or reducing the size of the preliminary pivot region.

When changing a mode from the main portrait mode 510 to the main landscape mode 520, the processor 120 may maintain the layout of components included in the pivot region 530 without changing the layout. In the main landscape mode 520, the processor 120 may first place components included in a pivot region 530a in the same layout as the layout in the main portrait mode 510, and may place components, which are not included in the pivot region 530a, in the remaining grid regions. According to an embodiment, the processor 120 may set a sub-pivot region smaller than the pivot region 530. In addition, under control of the processor 120, components within sub-pivot region 518 may be maintained.

According to an embodiment, in the main landscape mode 520, the pivot region 530a may be positioned to correspond to a reference line of the pivot region 530 in the main portrait mode 510. For example, when the reference line of the pivot region 530 is a first grid row at the top in the main portrait mode 510, the pivot region 530a may be positioned based on a first grid column on a left side in the main landscape mode 520.

For another example, unlike the illustration of FIG. 5, when the reference line of the pivot region 530 is a third grid row of the upper end in the main portrait mode 510, the pivot region 530a may be positioned based on the third grid column on the left side in the main landscape mode 520.

For still another example, unlike the illustration of FIG. 5, when the reference line of the pivot region 530 is a last grid row at the bottom in the main portrait mode 510, the pivot region 530a may be positioned based on the last grid column on the right side in the main landscape mode 520.

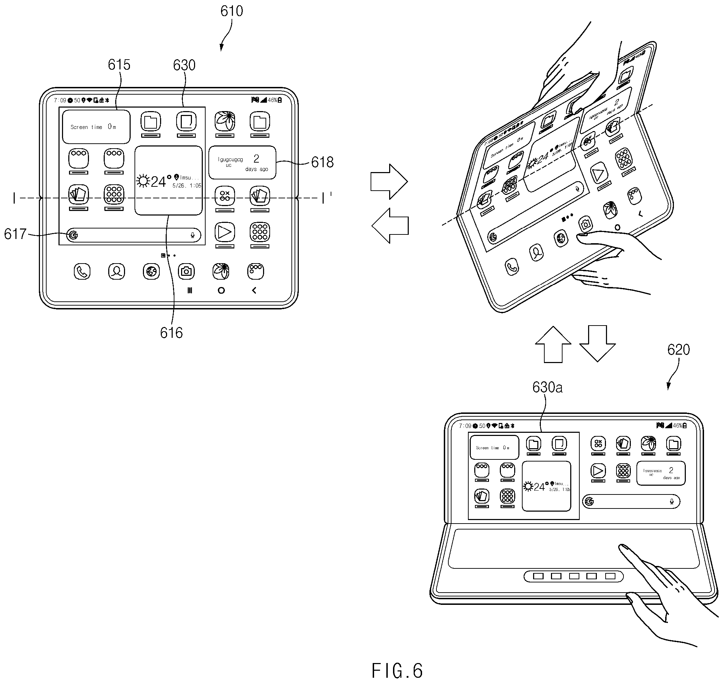

FIG. 6 illustrates an exemplary diagram illustrating a pivot region according to folding of a foldable electronic device, according to an embodiment. FIG. 6 illustrates a foldable electronic device, but an embodiment is not limited thereto.

Referring to FIGS. 1, 3, and 6, in a main landscape mode 610, the processor 120 may display a plurality of components through the flexible display 310. The plurality of components may include at least one of an application execution icon, a folder icon, and widgets 615, 616, 617, and 618. The main landscape mode 610 may be a mode in which the flexible display 310 operates in a landscape mode while the foldable electronic device 301 is unfolded (a folding angle is 180 degrees). For example, the main landscape mode 610 may be a state in which the folding line I-I' is positioned in a direction parallel to the ground.

In the main landscape mode 610, the processor 120 may align and place a plurality of components on preset grids of 4×4. For example, an application execution icon or folder icon may be placed inside one grid. The widgets 615, 616, 617, and 618 may be positioned inside grids of sizes of 2×1, 2×2, 4×1, and 2×1 depending on the set size, respectively.

The processor 120 may detect a folding operation of the electronic device 301 by using a second sensor (e.g., a hall sensor). When sensing information of the second sensor is changed to be greater than or equal to a specified reference value, the processor 120 may change a mode to a flex mode 620. The flex mode 620 may be a mode in which the flexible display 310 operates in a landscape mode while the foldable electronic device 301 is partially folded (a folding angle is between 80 degrees and 130 degrees). In the flex mode 620, one of the first display portion 310a or the second display portion 310b of the flexible display 310 may display a plurality of components, and the other thereof may display a touch pad or touch keyboard for a user input.

The processor 120 may determine the pivot region 630 based on grid arrangement of the main landscape mode 610, grid arrangement of the flex 620, the number of layouts of the widget 615, 616, 617, and 618 or the layout area of the widgets 615, 616, 617, and 618, and user information (e.g., a user input or a region including a lot of apps having heavy usage).

The size of the pivot region 630 in a first direction (horizontal direction) may be determined as the number of grids of the main landscape mode 610 in the first direction. For example, when the main landscape mode 610 is composed of grids of 6×4, the number of grids of a preliminary pivot region in the horizontal direction may be 6.

The size of the pivot region 630 in a second direction (vertical direction) may be determined as the number of grids of the flex mode 620 in the second direction. For example, when the flex mode 620 is composed of grids of 8×3, the number of grids of a preliminary pivot region in the vertical direction may be 3.

When the number of grids of the preliminary pivot region in the horizontal direction is maintained as 6, the arrangement of the widget 617 may be impossible. The processor 120 may determine a pivot region 630 of 4×3 by changing the number of grids of the preliminary pivot region in the horizontal direction to 4.

When changing a mode from the main landscape mode 610 to the flex mode 620, the processor 120 may maintain the layout of components included in the pivot region 630 without changing the layout. In the flex mode 620, the processor 120 may first place components included in the pivot region 630a in the same layout as the layout in the main portrait mode 610, and may place components, which are not included in the pivot region 630a, in the remaining grid regions.

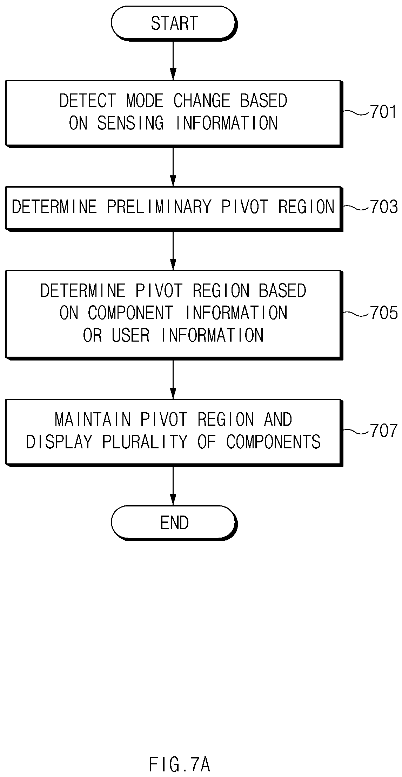

FIG. 7A is a flowchart illustrating determination of a pivot region, according to an embodiment.

Referring to FIGS. 1 to 3 and 7A, in operation 701, the processor 120 may detect a mode change of the electronic device 101 by using a first sensor or sensing information of the first sensor. For example, the processor 120 may detect the rotation of the bar-shaped electronic device 201 or the foldable electronic device 301 by using a first sensor (e.g., a gyro sensor, an acceleration sensor, or a grip sensor). For another example, the processor 120 may detect a folding angle of the foldable electronic device 301 by using a second sensor (e.g., a hall sensor).

In operation 703, the processor 120 may determine a preliminary pivot region based on a grid layout in a first mode and a grid layout in a second mode. For example, when the first mode has a grid layout of 4×6 and the second mode has a grid layout of 6×4, the processor 120 may determine a preliminary pivot region of 4×4.

According to an embodiment, the processor 120 may determine a reference line of the preliminary pivot region as a line preset in the first mode. For example, in a case of a main portrait mode, the reference line may be set to either the first line or the last line. For another example, in a case of a main landscape mode, the reference line may be set to either the first column or the last column.

In operation 705, the processor 120 may determine a pivot region by changing the preliminary pivot region based on component information (e.g., an area occupied by a widget or the number of widgets) or user information (e.g., an application usage frequency, application usability according to a mode, or a user input).

For example, to maximize the number of widgets, the processor 120 may determine the pivot region by moving the preliminary pivot region. For another example, when a boundary of the preliminary pivot region overlaps a widget, the processor 120 may move the preliminary pivot region or may reduce the size of the preliminary pivot region. For still another example, to include execution icons of applications having a high usage frequency by users, the processor 120 may determine the pivot region by moving the preliminary pivot region.

In operation 707, in the second mode, the processor 120 may maintain the layout of components included in the pivot region and may display a plurality of components. Under control of the processor 120, the layout of components included in the pivot region in the first mode may be maintained to be the same as that in the second mode.

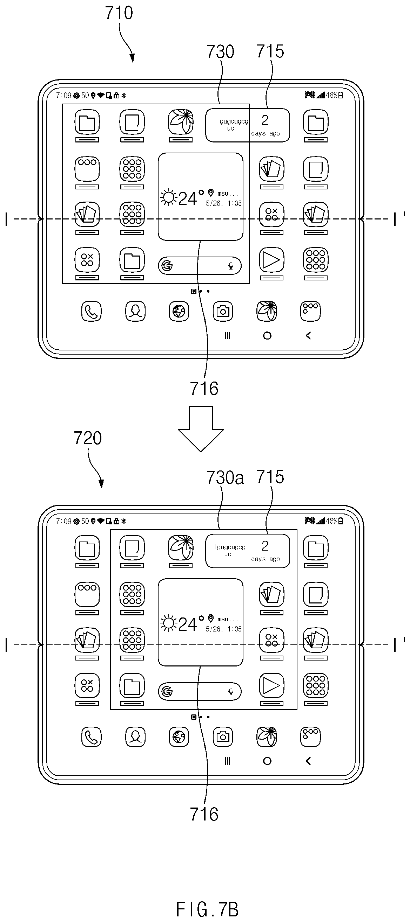

FIG. 7B is an exemplary diagram illustrating movement of a pivot region, according to an embodiment. FIG. 7B illustrates a foldable electronic device, but an embodiment is not limited thereto.

Referring to FIGS. 1, 3, and 7B, in a first state 710, the processor 120 may display a plurality of components through the flexible display 310. The plurality of components may include at least one of an application execution icon, a folder icon, and widgets 715 and 716.

In the first state 710, the processor 120 may align and place a plurality of components on preset grids of 4×4. For example, an application execution icon or folder icon may be placed inside one grid. The widget 715 and 716 may be positioned inside grids of sizes of 2×1 and 2×2 depending on the set size, respectively.

The processor 120 may determine a preliminary pivot region 730 based on the grid arrangement of a main landscape mode. For example, the processor 120 may determine the preliminary pivot region 730 composed of grids of 4×4 by using the first grid column as a reference line.

In a second state 720, the processor 120 may determine whether a boundary of a preliminary pivot region 730 overlaps the widgets 715 and 716. The processor 120 may determine a pivot region 730a so as not to overlap with the widget 716 by moving the preliminary pivot region 730. The processor 120 may determine the pivot region 730a composed of grids of 4×4 by using the second grid column as a reference line.

FIG. 7B illustrates the movement of the preliminary pivot region when overlapping the arrangement of widgets, but an embodiment is not limited thereto. For example, the processor 120 may compare the number of executions of icons included in a second grid column with the number of executions of icons included in a sixth grid column. When the number of executions in the sixth grid column is greater than the number of executions in the second grid column, the processor 120 may determine a pivot region, which is composed of grids of 4×4 by using a third grid column as a reference line and includes a sixth column.

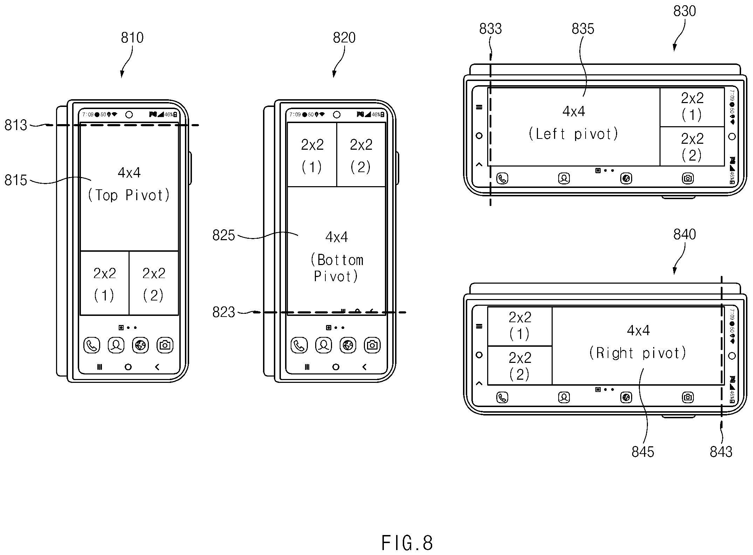

FIG. 8 is an exemplary view of a reference line of a folded state, according to an embodiment.

Referring to FIGS. 1, 3, and 8, the processor 120 may determine a reference line in a folded state of the foldable electronic device 301 and may determine a pivot region depending on the determined reference line.

The processor 120 may determine pivot regions 815 and 825 based on reference lines 813 and 823 in cover portrait modes 810 and 820, respectively. The processor 120 may determine the reference line as one of the first grid row 813 or the last grid row 823 by reflecting the arrangement of widgets. The processor 120 may determine the pivot region 815 (top pivot) of a specified size (4×4) in a bottom direction based on the first grid row 813. Alternatively, the processor 120 may determine the pivot region 825 (bottom pivot) of a specified size (4×4) in a top direction based on the last grid row 823.

Alternatively, the processor 120 may determine pivot regions 835 and 845 based on reference lines 833 and 843 in cover landscape modes 830 and 840, respectively. The processor 120 may determine the reference line as one of the first grid column 833 or the last grid column 843 by reflecting the arrangement of widgets. The processor 120 may determine the pivot region 835 (left pivot) of a specified size (4×4) in a right direction based on the first grid column 833. Alternatively, the processor 120 may determine the pivot region 845 (right pivot) of a specified size (4×4) in a left direction based on the last grid column 843.

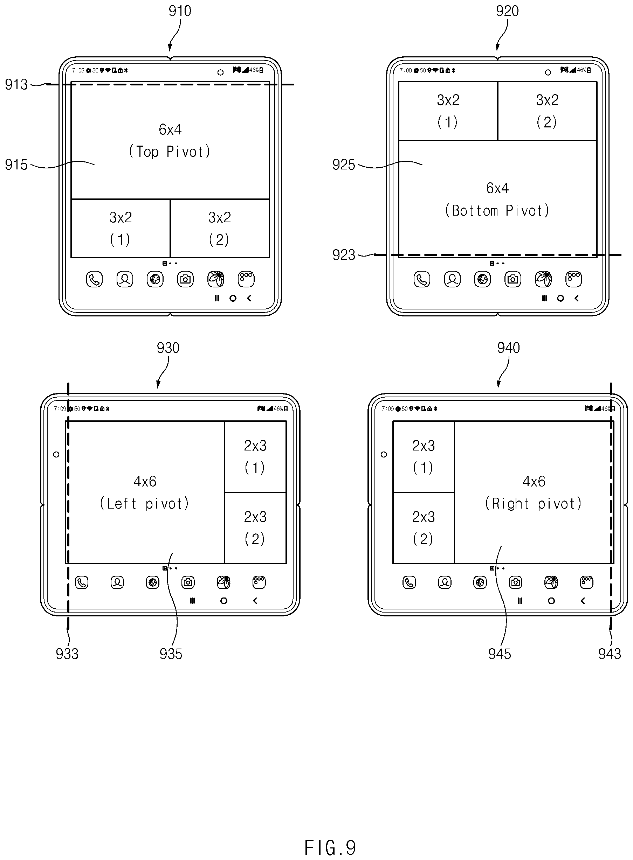

FIG. 9 is an exemplary diagram of a reference line in a fully unfolded state, according to an embodiment.

Referring to FIGS. 1, 3, and 9, the processor 120 may determine a reference line in a fully unfolded state of the foldable electronic device 301 and may determine a pivot region depending on the determined reference line.

The processor 120 may determine pivot regions 915 and 925 based on reference lines 913 and 923 in main portrait modes 910 and 920, respectively. The processor 120 may determine the reference line as one of the first grid row 913 or the last grid row 923 by reflecting the arrangement of widgets. The processor 120 may determine the pivot region 915 (top pivot) of a specified size (6×4) in a bottom direction based on the first grid row 913. Alternatively, the processor 120 may determine the pivot region 925 (bottom pivot) of a specified size (6×4) in a top direction based on the last grid row 923.

The processor 120 may determine pivot regions 935 and 945 based on reference lines 933 and 943 in main landscape modes 930 and 940, respectively. The processor 120 may determine the reference line as one of the first grid column 933 or the last grid column 943 by reflecting the arrangement of widgets. The processor 120 may determine the pivot region 935 (left pivot) of a specified size (4×6) in a right direction based on the first grid column 933. Alternatively, the processor 120 may determine the pivot region 945 (right pivot) of a specified size (4×6) in a left direction based on the last grid column 943.

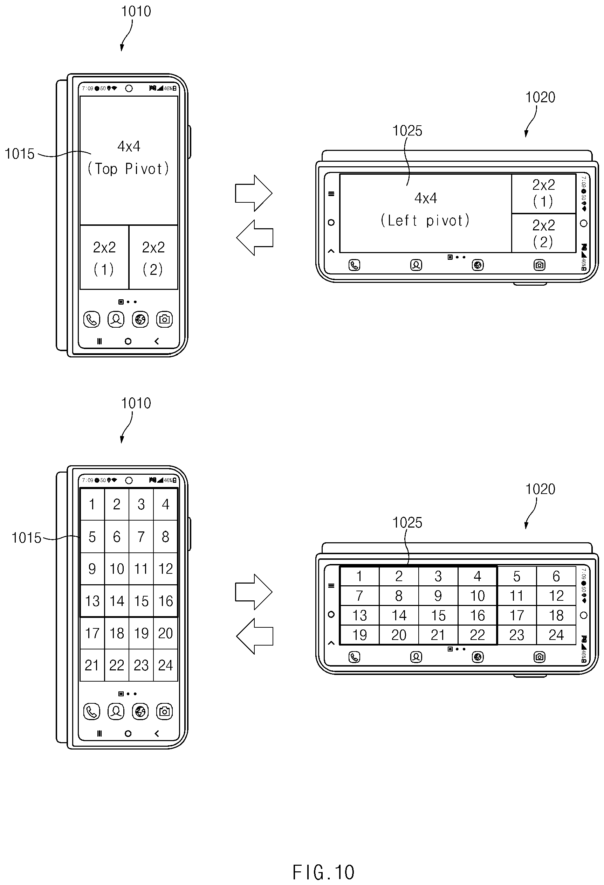

FIG. 10 shows mapping of a top pivot region and a left pivot region, according to an embodiment. FIG. 10 illustrates a link between a cover portrait mode and a cover landscape mode, but an embodiment is not limited thereto.

Referring to FIGS. 1, 3, and 10, the processor 120 may determine a top pivot region 1015 based on a first grid row in a cover portrait mode 1010. The processor 120 may switch the cover portrait mode 1010 to a cover landscape mode 1020 based on sensing information of a first sensor. The processor 120 may determine a left pivot region 1025 based on a first grid column in the cover landscape mode 1020.

When the cover portrait mode 1010 is switched to the cover landscape mode 1020, the processor 120 may maintain the same layout of components, which are included in the top pivot region 1015 in the cover portrait mode 1010, as the layout of components included in the left pivot region 1025 in the cover landscape mode 1020. For example, under control of the processor 120, the top pivot region 1015 may include first to sixteenth grids. In the cover landscape mode 1020, under control of the processor 120, the left pivot region 1025 may include the first to fourth grids, the seventh to tenth grids, the thirteenth to sixteenth grids, and the nineteenth to 22nd grids.

The processor 120 may map the first to fourth grids of the top pivot region 1015 onto the first to fourth grids of the left pivot region 1025, and may map the fifth to eighth grids of the top pivot region 1015 onto the seventh to tenth grids of the left pivot region 1025. Moreover, the processor 120 may map the ninth to twelfth grids of the top pivot region 1015 onto the thirteenth to sixteenth grids of the left pivot region 1025, and may map the thirteenth to sixteenth grids of the top pivot region 1015 onto the nineteenth to 22nd grids of the left pivot region 1025.

When the cover landscape mode 1020 is switched to the cover portrait mode 1010, the processor 120 may maintain the same layout of components, which are included in the left pivot region 1025 in the cover landscape mode 1020, as the layout of components included in the top pivot region 1015 in the cover portrait mode 1010.

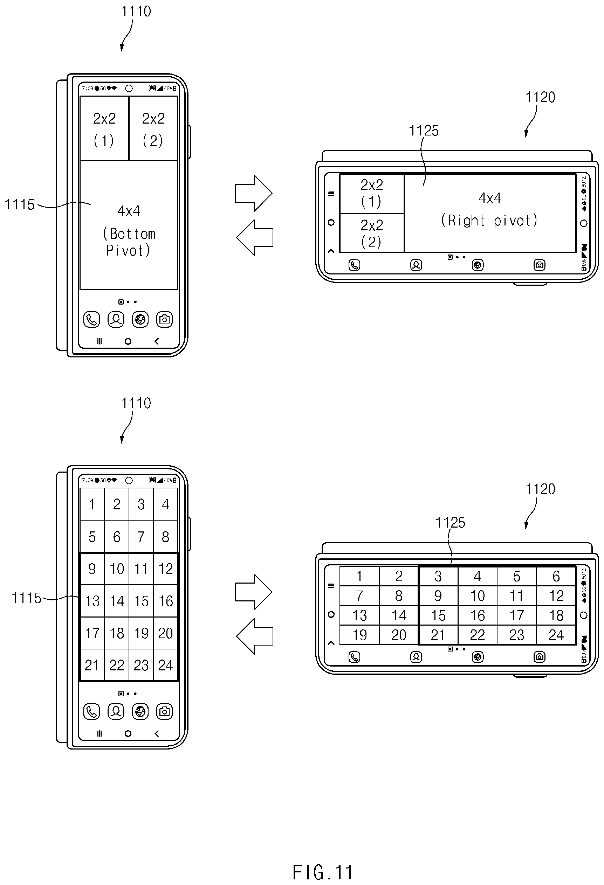

FIG. 11 shows mapping of a bottom pivot region and a right pivot region, according to an embodiment. FIG. 11 illustrates a link between a cover portrait mode and a cover landscape mode, but an embodiment is not limited thereto.

Referring to FIGS. 1, 3, and 11, the processor 120 may determine a bottom pivot region 1115 based on a last grid row in a cover portrait mode 1110. The processor 120 may switch the cover portrait mode 1010 to a cover landscape mode 1120 based on sensing information of a first sensor. The processor 120 may determine a right pivot region 1125 based on a last grid column in the cover landscape mode 1120.

When the cover portrait mode 1110 is switched to the cover landscape mode 1120, the processor 120 may maintain the same layout of components, which are included in the bottom pivot region 1115 in the cover portrait mode 1110, as the layout of components included in the right pivot region 1125 in the cover landscape mode 1120. Under control of the processor 120, the bottom pivot region 1115 may include ninth to 24th grids. In the cover landscape mode 1120, under control of the processor 120, the right pivot region 1125 may include the third to sixth grids, the ninth to twelfth grids, the fifteenth to eighteenth grids, and the 21st to 24th grids so as to be the same as the bottom pivot region 1115.

The processor 120 may map the ninth to twelfth grids of the bottom pivot region 1115 onto the third to sixth grids of the right pivot region 1125, and may map the thirteenth to sixteenth grids of the bottom pivot region 1115 onto the ninth to twelfth grids of the right pivot region 1125. Moreover, the processor 120 may map the seventeenth to twentieth grids of the bottom pivot region 1115 onto the fifteenth to eighteenth grids of the right pivot region 1125, and may map the 21st to 24th grids of the bottom pivot region 1115 onto the 21st to 24th grids of the right pivot region 1125. When the cover landscape mode 1120 is switched to the cover portrait mode 1110, the processor 120 may maintain the same layout of components, which are included in the right pivot region 1125 in the cover landscape mode 1120, as the layout of components included in the bottom pivot region 1115 in the cover portrait mode 1110.

According to an embodiment, an electronic device (101; 201; 301) may include a sensor module (176), at least one display (160; 210; 310; 370), a memory (130), and a processor (120). The processor (120) may display a plurality of components through the display (160; 210; 310; 370) in a first mode of the electronic device (101; 201; 301). The processor (120) may determine a pivot region including a plurality of grids. The processor (120) may detect a change to a second mode of the electronic device (101; 201; 301) based on sensing information sensed through the sensor module (176). In the second mode, the processor (120) may maintain a layout of components included in the pivot region and display the plurality of components.

According to an embodiment, the processor (120) may map grids of the first mode onto grids of the second mode such that the layout is maintained.

According to an embodiment, the processor (120) may determine the pivot region based on the number of grids of the first mode in a first direction and the number of grids of the second mode in a second direction.

According to an embodiment, the processor (120) may determine the pivot region based on an arrangement of widgets included in the plurality of components, or the number of the widgets.

According to an embodiment, the processor (120) may determine a preliminary pivot region based on the number of grids of the first mode in a first direction and the number of grids of the second mode in a second direction. The processor (120) may determine the pivot region by moving the preliminary pivot region or changing a size of the preliminary pivot region by reflecting an arrangement of widgets included in the plurality of components.

According to an embodiment, the processor (120) may preset a reference line for the first mode or the second mode. The processor (120) may determine the pivot region so as to correspond to the reference line.

According to an embodiment, the sensor module (176) may include a first sensor configured to sense rotation of the electronic device (101; 201; 301).

According to an embodiment, the first sensor may include at least one of a gyro sensor, an acceleration sensor, or a grip sensor.

According to an embodiment, the first mode may be one of a portrait mode or a landscape mode. The second mode may be the other of the portrait mode or the landscape mode.

According to an embodiment, the electronic device may further include a first housing (321), a second housing (322), and a hinge structure (325). The at least one display (160; 310; 370) may include a sub-display (370) and a flexible display (310). When the first housing (321) and the second housing (322) are folded about the hinge structure (325), the sub-display (370) may be exposed to an outside.

According to an embodiment, the sensor module (176) includes a second sensor that senses an angle between the first housing (321) and the second housing (322).

According to an embodiment, the second sensor may be a hall sensor.

According to an embodiment, the first mode or the second mode may include a mode in which a first portion of the flexible display (310) displays the plurality of components, and a second portion of the flexible display (310) receives a user input in a partially folded state such that the first housing (321) and the second housing (322) form a specified angle range.

According to an embodiment, a method for displaying content may be performed by an electronic device (101; 201; 301). The method may include displaying a plurality of components through a display (160; 210; 310; 370) of the electronic device (101; 201; 301) in a first mode of the electronic device (101; 201; 301), determining a pivot region including a plurality of grids, detecting a change to a second mode of the electronic device (101; 201; 301) based on sensing information sensed through the sensor module (176) of the electronic device (101; 201; 301), and maintaining a layout of components included in the pivot region and displaying the plurality of components in the second mode.

According to an embodiment, the displaying of the plurality of components may include mapping grids of the first mode onto grids of the second mode such that the layout is maintained.

According to an embodiment, the determining of the pivot region may include determining the pivot region based on the number of grids of the first mode in a first direction and the number of grids of the second mode in a second direction.

According to an embodiment, the determining of the pivot region may include determining the pivot region based on an arrangement of widgets included in the plurality of components, or the number of the widgets.

According to an embodiment, the determining of the pivot region may include determining a preliminary pivot region based on the number of grids of the first mode in a first direction and the number of grids of the second mode in a second direction, and determining the pivot region by moving the preliminary pivot region or changing a size of the preliminary pivot region by reflecting an arrangement of widgets included in the plurality of components.

According to an embodiment, the determining of the pivot region may include presetting a reference line for the first mode or the second mode, and determining the pivot region so as to correspond to the reference line.

According to an embodiment, the first mode may be one of a portrait mode or a landscape mode, and the second mode may be the other of the portrait mode or the landscape mode.

According to an embodiment of the disclosure, when a mode is changed by rotation or folding, the electronic device may provide a consistent screen to a user while maintaining components included in the pivot region.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101; 201; 301) comprising:
a sensor module (176);
at least one display (160; 210; 310; 370);
a memory (130); and
at least one processor (120),
wherein the at least one processor (120) is configured to:
display a plurality of components through the display (160; 210; 310; 370) in a first mode of the electronic device (101; 201; 301);
determine a pivot region including a plurality of grids;
detect a change to a second mode of the electronic device (101; 201; 301) based on sensing information sensed through the sensor module (176); and
in the second mode, maintain a layout of components included in the pivot region and display the plurality of components.

2. The electronic device of claim 1, wherein the at least one processor (120) is further configured to:
map grids of the first mode onto grids of the second mode such that the layout is maintained.

3. The electronic device of claim 1, wherein the at least one processor (120) is further configured to:
determine the pivot region based on a number of grids of the first mode in a first direction and a number of grids of the second mode in a second direction.

4. The electronic device of claim 1, wherein the at least one processor (120) is further configured to:
determine the pivot region based on an arrangement of widgets included in the plurality of components, or a number of the widgets.

5. The electronic device of claim 1, wherein the at least one processor (120) is further configured to:
determine a preliminary pivot region based on a number of grids of the first mode in a first direction and a number of grids of the second mode in a second direction; and
determine the pivot region by moving the preliminary pivot region or changing a size of the preliminary pivot region by reflecting an arrangement of widgets included in the plurality of components.

6. The electronic device of claim 1, wherein the at least one processor (120) is further configured to:
preset a reference line for the first mode or the second mode; and
determine the pivot region so as to correspond to the reference line.

7. The electronic device of claim 1, wherein the sensor module (176) includes a first sensor configured to sense rotation of the electronic device (101; 201; 301).

8. The electronic device of claim 7, wherein the first sensor includes at least one of a gyro sensor, an acceleration sensor, or a grip sensor.

9. The electronic device of claim 1, wherein the first mode is one of a portrait mode or a landscape mode, and
wherein the second mode is the other of the portrait mode or the landscape mode.

10. The electronic device of claim 1, further comprising:
a first housing (321);
a second housing (322); and
a hinge structure (325),
wherein the at least one display (160; 310; 370) includes a sub-display (370) and a flexible display (310), and
wherein, when the first housing (321) and the second housing (322) are folded about the hinge structure (325), the sub-display (370) is exposed to an outside.

11. The electronic device of claim 10, wherein the sensor module (176) includes a second sensor configured to sense an angle between the first housing (321) and the second housing (322).

12. The electronic device of claim 10, wherein the second sensor is a hall sensor.

13. The electronic device of claim 10, wherein the first mode or the second mode includes a mode in which a first portion of the flexible display (310) displays the plurality of components, and
wherein a second portion of the flexible display (310) receives a user input in a partially folded state such that the first housing (321) and the second housing (322) form a specified angle range.

14. A method for displaying content performed by an electronic device (101; 201; 301), the method comprising:
displaying a plurality of components through a display (160; 210; 310; 370) of the electronic device (101; 201; 301) in a first mode of the electronic device (101; 201; 301);
determining a pivot region including a plurality of grids;
detecting a change to a second mode of the electronic device (101; 201; 301) based on sensing information sensed through the sensor module (176) of the electronic device (101; 201; 301); and
in the second mode, maintaining a layout of components included in the pivot region and displaying the plurality of components.

15. The method of claim 14, wherein the displaying of the plurality of components includes:
mapping grids of the first mode onto grids of the second mode such that the layout is maintained.
